# EUROPÄISCHE PATENTANMELDUNG

(11) **EP 0 786 532 A2**
(43) Veröffentlichungstag der Anmeldung: **30.07.1997**
(21) Anmeldenummer: 97100795.0
(22) Anmeldetag: 20.01.1997
(51) Int. Cl.: C22C 33/00

(54) **Siliziumhaltige Rückstände enthaltendes Brikett als Additiv für metallurgische Zwecke und Verfahren zu seiner Herstellung**

(30) Priorität: 24.01.1996 DE 19602486
(71) Anmelder: Elkem ASA, 0303 Oslo (NO)
(72) Erfinder: LUTZ, Stephan, D-52445 Titz (DE)
(74) Vertreter: Bartsch, Elisabeth, Dr.

(57) **Zusammenfassung**

Zur Vermeidung einerseits der aufwendigen Aufbereitung zur Wiedergewinnung der wertvollen Bestandteile oder andererseits des totalen Verlusts durch Deponierung von siliciumhaltigen Rückständen, wie sie insbesondere bei der Synthese von Organosilanen aus metallischem Silicium und insbesondere Methylchlorid anfallen, werden solche siliciumhaltige Rückstände zu ihrer nutzbaren Verwertung gemäß der Erfindung zu Briketts verarbeitet als Additiv für die Qualitätseinstellung von im Kupolofen erzeugten Gußeisen. Die Briketts enthalten außer dem siliciumhaltigen Rückstand 1 - 10 Gew.% an Kartonmasse (Pappe), 5 - 40 Gew.% an hydraulischem Zement und 0 - 20 Gew.% an zusätzlichen, die Gußeisenqualität beeinflussenden Zusatzstoffen. Die Zement und Pappmasse enthaltenden Briketts sind für den Schmelzofenbetrieb hinreichend mechanisch und thermisch stabil. Der Ausbeutegrad im Gußeisen für das eingesetzte, feinteilige Silicium liegt bei 85 % und damit in der gleichen Größenordnung wie bei Verwendung von stückigem Ferrosilicium.

## Beschreibung

Die Erfindung bezieht sich auf siliciumhaltige Additive für eisenmetallurgische Schmelzprozesse, betrifft im eigentlichen die Formulierung von siliciumhaltigen Rückständen zu Briketts und hat ihren ökonomischen und umweltbezogenen Ausgangspunkt in dem Problem der Beseitigung bzw. Verwertung insbesondere solcher siliciumhaltiger Abfallstoffe, wie sie bei der Erzeugung von Organosilanen durch direkte Umsetzung von Siliciumpulver mit Methylchlorid in Gegenwart eines Kupferkatalysators anfallen.

Bei dieser sogenannten Direktumsetzung von Silicium mit Methylchlorid zu Organosilanen wird vorzugsweise eine aus Siliciumpulver und Kupferpartikeln eingesetzte sogenannte Kontaktmasse mit einem organischen Halogenid umgesetzt. Die verbrauchte Kontaktmasse fällt als siliciumhaltiger Rückstand an, der außer Silicium und Kupfer ferner Elemente wie Aluminium und Eisen enthält. Erzeugt man die Chlorsilane, besonders Tri- und Tetrachlorsilan, durch Umsetzung von gemahlenem oder gebrochenem technischem Silicium oder Ferrosilicium mit Chlorgas oder Chlorwasserstoffgas, sammeln sich die in dem siliciumhaltigen Ausgangsmaterial enthaltenen Verunreinigungen von hauptsächlich Eisen und Calcium in dem siliciumhaltigen Reaktionsrückstand an. Siliciumhaltige Rückstände ergeben sich ferner bei weiteren siliciumtechnischen oder -metallurgischen Prozessen, so beispielsweise besonders als Filterstäube beim Brechen oder Mahlen von metallischem Silicium, wobei derartige Rückstände feinteilig sind, hauptsächlich als Stäube anfallen und eisenhaltig sind.

Solche, wie die genannten, aber auch andere siliciumhaltige Rückstände sind nur sehr schwierig und kostspielig aufzuarbeiten, sofern man deren wertvolle Bestandteile wiedergewinnen will, und werden daher zumeist unverwertet in besonderen Deponien abgelagert.

So befaßt sich die die "Desaktivierung von verbrauchtem Siliciumpulver" betreffende EP 0 287 934 A2 mit der Deponierung der bei der Erzeugung von Chlorsilanen nach der Direktsynthese anfallenden siliciumhaltigen Rückstände. Zur Beseitigung des Problems, daß diese Rückstände mit Wasser sehr reaktiv sind und exotherm reagieren, wird vorgeschlagen, den siliciumhaltigen Rückstand in Form von Pellets, die einen hohen Anteil an einem organischen Binder enthalten, zu deponieren. Der organische Binder, vorzugsweise Lignin, soll einerseits den Pellets eine ausreichende mechanische Beständigkeit verleihen, damit sie beim Abfüllen und beim Transport nicht zerbrechen, und soll andererseits die reaktiven Teilchen umhüllen, um sie gegen Feuchtigkeit abzuschirmen. Die Pellets sollen wegen der Bruchgefahr jedoch kleiner als 2 cm sein. Sie werden aus einer Mischung aus dem siliciumhaltigen Rückstand, dem Bindemittel und vorzugsweise Wasser durch Druckkompaktierung oder durch Mischagglomeration hergestellt, wobei die Pelletisierung durch Druckkompaktierung in einer Kolben- oder Formpresse, einer Tabletten-Presse, einer Rollpresse, einer Pelletisierungsmühle oder einem Schraubenextruder erfolgen kann und die Pelletisierung durch Mischagglomeration beispielsweise in einem Drehtrommel-Agglomerator, einem Schaufelmischer als Knetwerk oder einem Durchlaufmischer. Die erhaltenen Pellets werden dann bei 250°C getrocknet.

Der Erfindung liegt die ökonomische und umweltorientierte Zielsetzung zugrunde, siliciumhaltige Rückstände der genannten Art weder deponieren noch einer aufwendigen Aufbereitung unterziehen zu müssen, sondern sie unmittelbar, allerdings entsprechend formuliert, einer nutzbringenden technischen Verwertung zuzuführen. Ein dafür geeignetes technisches Gebiet ist das der Herstellung von siliciumhaltigem Eisen oder Stahl, insbesondere der Gußeisenherstellung im Kupolofen unter Verwendung von siliciumhaltigen Additiven.

Bei der Erzeugung von Gußeisen im Kupolofen werden zur Einstellung der Eisenqualität Legierungselemente als Additive verwendet, welche entweder der Beschickung für den Schmelzofen oder der Eisenschmelze nach deren Abstich zugesetzt werden. Ein typisches derartiges Legierungelement ist metallisches Silicium. Für den Zusatz von Silicium zur Eisenschmelze dient im allgemeinen Ferrosilicium, welches allerdings ein kostenintensives Material darstellt. Weitere der Ofenbeschickung zuzusetzende Legierungselemente sind Kupfer, Chrom und Mangan, hauptsächlich eingestzt in Form von Kupferschrott bzw. als Ferrochrom und Ferromangan.

Im Lichte der gestellten ökonomischen und umweltorientierten Zielsetzung liegt die technische Aufgabe der Erfindung darin, unter Verwendung der genannten siliciumhaltigen Rückstände ein Additiv für den Einsatz im Schmelzofen zur Verfügung zu stellen.

Voraussetzung für die Lösung dieser Aufgabe ist die Berücksichtigung gewisser Parameter: Der siliciumhaltige Rückstand soll in einer kompakten, nicht staubenden und feuchtigkeitsunempfindlichen Zubereitung vorliegen, wozu grundsätzlich von den gemäß der EP 0 287 934 A2 bekannten Techniken des Pelletierens unter Verwendung eines Binders Gebrauch gemacht werden kann. Andererseits darf mit Hinblick auf die hohen Ofentemperaturen kein Binder verwendet werden, der, wie von den organischen Bindern gemäß der EP 0 287 934 A2 ohne weiteres anzunehmen ist, bei den herrschenden Schmelzofentemperaturen den Preßkörper nicht schon beim Aufgeben oben auf die zu schmelzende Ofenbeschickung zerfallen läßt, sondern dem Preßkörper erlaubt, auch in den weiter unten gelegenen Partien der Ofenbeschickung zunächst unzersetzt bzw. unzerfallen vorzuliegen, um so eine unschädliche Ofenführung zu gewährleisten. Diesbezüglich günstig dürften thermisch und mechanisch hinreichend stabile Preßlinge in Form von Briketts sein.

Dies erläutert sich folgendermaßen. Ein Kupolofen wird mit der zu schmelzenden Charge von oben her beschickt. Entweder vorzugsweise der Charge außerhalb des Ofens schon beigemischt, beispielsweise in Wiegebunker, oder der in den Ofen eingefüllten Charge Zug um Zug oben aufgegeben, werden die die Gußeisenqualität bestimmenden Additive zugesetzt. Die sich während des Schmelzprozesses entwickelnden heißen Gase steigen nach oben, heizen das allmählich absinkende Chargenmaterial im oberen Ofenbereich vor und ziehen als Abgase ab. Setzt man als qualitätsbestimmendes Additiv siliciumhaltige Rückstände enthaltende Preßlinge, beispielsweise in Brikettform, ein, sollen diese Briketts nicht zerfallen, bevor sie die Schmelzzone erreicht haben. Andernfalls ist mit folgenden Nachteilen zu rechnen. Beim vorzeitigen Zerfall könnten die Briketts das in ihnen enthaltene Siliciummaterial in seiner feinteiligen Form freisetzen, so daß ein Teil des vorgelegten Siliciums mit den Abgasen abgeführt wird und für den Schmelzprozeß verlorengeht. Darüber hinaus ist zu befürchten, daß das freigesetzte, nicht abgetriebene feine Siliciummaterial die Gasdurchlässigkeit der Ofenbeschickung herabsetzt, damit den gleichmäßigen Gasfluß durch die Beschickung nach oben stört und zu einer über den Ofenquerschnitt ungleichmäßigen Vorerhitzung der zu schmelzenden Charge führt.

Geht man von Briketts mit siliciumhaltigem Rückstand als Additiv für die Eisenherstellung aus, läßt sich vorsehen, sämtliche für die herzustellende Eisen- oder Stahlqualität vorgesehenen weiteren Zusatzstoffe, insbesondere die Legierungselemente, sogleich bei der Brikettierung mithineinzuarbeiten, so daß schließlich in den Briketts eine Additivmischung als eine einzige Zusatzstoff-Quelle vorliegt, die eine Zugabe von Zusatzstoffen aus mehreren Quellen erübrigt.

Die genannte technische Aufgabe gemäß der Erfindung wird gemäß der Merkmale des Patentanspruchs 1 durch siliciumhaltige Rückstände enthaltende Briketts gelöst, welche sich, bezogen auf die Trockenmasse, zusammensetzen aus 1 - 10 Gew.% an zermahlener Pappe (Karton), 5 - 40 Gew.% an hydraulischem Zement, 0 - 20 Gew.% an Partikeln von Metall oder Metallegierung und dem siliciumhaltigen Rückstand als Rest.

Gemäß der abhängigen Ansprüche 2 bis 4 weisen die Briketts als Additiv für die Eisenherstellung im Kupolofen vorzugsweise einen Gehalt von 2 - 5 Gew.% an der Kartonmasse und 10 - 30 Gew.% an dem hydraulischen Zement auf, für welchen vorzugsweise Portlandzement verwendet wird, doch läßt sich auch ein anderer hydraulischer Zement verwenden, beispielsweise Calciumaluminat-Zement.

Als weitere Legierungselemente können die Briketts gemäß der Erfindung Metallteilchen aus Kupfer und/oder von Legierungen, wie Ferrosilicium, Ferrochrom, Ferromangan, und, je nach Bedarf, auch von weiteren Elementen oder Legierungen enthalten.

Wie sich überraschenderweise herausgestellt hat, verleiht der Anteil an Kartonmasse den Briketts eine gute Grundfestigkeit schon dann, wenn der Zement noch nicht ausgehärtet ist, so daß die gerade erst ausgeformten Briketts bereits gut handhabbar und für ihren Zweck einsetzbar sind.

Hergestellt werden die Briketts gemäß der Erfindung durch Vermischen der Komponenten unter Anteigen mit Wasser und anschließendem Ausformen der feuchten Masse zum Brikett durch Druckkompaktierung nach einem der bekannten Verfahren, wobei die Brikettierung durch Extrusion bevorzugt ist. Die Vermischung der Komponenten kann zunächst trocken erfolgen, wonach das Wasser zugegeben wird, oder die Vermischung erfolgt zugleich in Gegenwart des Wassers. Der auf den Trockenanteil bezogene Wassergehalt liegt insgesamt bei 5 bis 20 Gew.%, wobei zu berücksichtigen ist, daß das eingesetzte Material an siliciumhaltigem Rückstand regelmäßig selbst wasserhaltig ist. Beispiele für den Wassergehalt von siliciumhaltigen Rückständen finden sich in Tabelle 1 weiter unten.

Mittels Briketts gemäß der Erfindung hergestelltes Gußeisen führt zu dem überraschenden Ergebnis, daß sich die angebotene Siliciummenge mit gleich gutem Ausbeutegrad in der Größenordnung von 85 % wie bei Verwendung von stückigem Ferrosilicium in dem Gußeisen wiederfindet. Das bedeutet unter anderem, daß wegen der Formulierung des siliciumhaltigen Rückstands in den Pappmasse und Zement enthaltenden Briketts kein Abtreiben des ursprünglich feinteiligen Siliciummaterials mit den Abgasen stattfindet.

### Beispiel:

Es wurden Briketts aus Siliciumrückstand, Kartonmasse, Portlandzement, Ferrosilicium und Wasser in einer hydraulischen Kolbenpresse hergestellt. Der Druck betrug 100 MPa, die Preßtemperatur lag bei Raumtemperatur und die Brikettform hatte einen Durchmesser von 50 mm und eine Höhe von 20 mm. Vor dem Verpressen der verschiedenen Komponenten waren diese zuvor intensiv in einem Versuchsmischer (vom Typ R02 der Firma Eirich, Deutschland) vermischt worden.

Die Druckfestigkeit der so hergestellten Briketts wurde bei Raumtemperatur einerseits unmittelbar nach der Herstellung und andererseits nach einer in reduzierender Atmosphäre stattgefundenen Erhitzung der Briketts auf 1000°C bestimmt.

Verschiedene Kompositionen und deren Druckfestigkeiten bei niedriger und bei hoher Temperatur sind in Tabelle 1 aufgeführt.

**Tabelle 1**

| Versuchs-Nummer | 1 | 2 | 3 | 4 | 5 | 6 | 7 |
|---|---|---|---|---|---|---|---|
| siliciumhaltiger Rückstand (Trockenmasse) in Gew.% | 77 | 57 | 72 | 69.5 | 67 | 69.5 | 69.5 |
| ursprünglicher Wassergehalt im siliciumhaltigen Rückstand in Gew.% | 11.2 | 11.2 | 17.7 | 17.7 | 17.7 | 15 | 8.7 |
| feinteiliges Ferrosilicium in Gew.% | - | - | - | - | - | - | 10 |

| Binder: | | | | | | | |
|---|---|---|---|---|---|---|---|
| Kartonmasse in Gew.% | 3 | 3 | 3 | 3 | 3 | 3 | 3 |
| Portlandzement in Gew.% | 20 | 40 | 25 | 27.5 | 30 | 27.5 | 27.5 |
| Anfangs-Druckfestigkeit in MPa | 18.1 | 32.5 | 11.2 | 9.9 | 10.8 | 20.8 | 16.2 |
| Druckfestigkeit in MPa nach Erhitzen auf 1000°C | 15.6 | 10.4 | 4.4 | 4.4 | 4.4 | 10.5 | 7.7 |

Wie sich aus der Tabelle ergibt, weisen die untersuchten Briketts eine hervorragende Anfangsfestigkeit und eine gute Druckfestigkeit nach Erhitzen auf 1000°C auf. Im praktischen Versuch zerfielen die Briketts während ihrer beobachtbaren Aufenthaltszeit im Kopfbereich der Beschickung des Kupolofens nicht. Soweit in der Tabelle nur ein beispielhafter Versuch für die Zumischung von weiteren Legierungsbestandteilen verzeichnet ist (Versuch Nr. 7), soll dies die Lehre, daß sich den Briketts alle möglichen Metalle oder Legierungen für die Qualitätseinstellung bzw. -verbesserung des herzustellenden Gußeisens bzw. anderer Eisen- oder Stahlqualitäten zumischen lassen, nicht einschränken, und soll als Beispiel für den mit der Erfindung erzielbaren Vorteil genügen, daß sämtliche vorgesehene Additiv-Substanzen in die Briketts eingearbeitet sein können, so daß sich die Verwendung mehrerer Additiv-Quellen erübrigt. Der Hauptvorteil der Erfindung beruht jedoch in der nützlichen und kostenbilligen Verwertung von siliciumhaltigen Rückständen, welche bislang vorwiegend ungenutzt blieben und unter kostenaufwendiger Präparierung als Abfallstoffe zu deponieren waren.

## Patentansprüche

1. Siliciumhaltige Abfallstoffe enthaltendes Brikett als Additiv für metallurgische Zwecke, enthaltend auf das Trockengewicht bezogen: 1 - 10 Gew.% an Kartonmasse, 5 - 40 Gew.% an hydraulischem Zement, 0 - 20 Gew.% an Teilchen aus wenigstens einem Metall und/oder einer Metalllegierung und den siliciumhaltigen Rückstand als Rest.

2. Brikett nach Anspruch 1, dadurch gekennzeichnet, daß der Gehalt an Kartonmasse 2 - 5 Gew.% und der Gehalt an hydraulischem Zement 10 - 30 Gew.% beträgt.

3. Brikett nach Anspruch 1 oder 2, dadurch gekennzeichnet, daß die Briketts an Teilchen aus Metall bzw. Metallegierung enthalten: wenigstens Kupfer und/oder Ferrosilicium und/oder Ferrochrom und/oder Ferromangan.

4. Brikett nach einem der Ansprüche 1 bis 3, gekennzeichnet durch einen Querschnittsdurchmesser von etwa 50 mm und eine Höhe von etwa 20 mm.

5. Verfahren zur Herstellung eines Briketts gemäß einem der Ansprüche 1 bis 4, dadurch gekennzeichnet, daß man die Komponenten unter gleichzeitigem oder nachträglichem Zusatz von Wasser vermischt und die angeteigte Mischung mittels Druckkompaktierung, vorzugsweise durch Extrudieren, zum Brikett ausformt.

6. Verfahren nach Anspruch 5, dadurch gekennzeichnet, daß man einschließlich des in dem siliciumhaltigen Rückstand enthaltenen Wassers bezogen auf den Trockengehalt der Komponenten zum Anteigen 5 - 20 Gew.% Wasser verwendet.

7. Verwendung eines Briketts gemäß einem der Ansprüche 1 bis 4 als Additiv für die Herstellung von Gußeisen im Kupolofen.
